(19) **Europäisches Patentamt**

**European Patent Office**

**Office européen des brevets**

(11) **EP 1 541 600 A1**

(12) **EUROPÄISCHE PATENTANMELDUNG**

(43) Veröffentlichungstag:
**15.06.2005 Patentblatt 2005/24**

(21) Anmeldenummer: **04026366.7**

(22) Anmeldetag: **05.11.2004**

(51) Int Cl.[7]: **C08F 222/12**, C08F 218/08,
C08F 2/30, C09D 135/02,
C09D 131/04, A23L 1/00,
A23C 19/16

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(30) Priorität: **02.12.2003 DE 10356779**

(71) Anmelder: **Celanese Emulsions GmbH**
**61476 Kronberg/Ts. (DE)**

(72) Erfinder:
• **Jakob, Martin, Dr.**
**65779 Kelkheim (DE)**
• **Harrer, Heinrich, Dr.**
**60529 Frankfurt am Main (DE)**

(74) Vertreter: **Ackermann, Joachim, Dr.**
**Postfach 11 13 26**
**60048 Frankfurt am Main (DE)**

(54) **Polymerdispersionen mit verbesserter Wasserdampfsperrwirkung, deren Herstellung und Verwendung zur Lebensmittelbeschichtung**

(57) Beschrieben wird eine wässrige copolymere Polyvinylester-Dispersion, enthaltend

A) 100 Gewichtsteile eines Copolymerisats abgeleitet von

A1) 34,9 bis 95 Gew.-% Vinylestern von aliphatischen, gesättigten Carbonsäuren,
A2) 4,9 bis 65 Gew.-% Maleinsäureestern und/oder Fumarsäureestern von einwertigen aliphatischen Alkoholen mit einer Kettenlänge von $C_1$-$C_{18}$ und/oder alpha-Olefinen mit 2 bis 8 C-Atomen,
A3) 0,1 bis 10 % mindestens einem Comonomeren mit mindestens einer stabilisierenden nichtionischen oder ionischen Gruppe, sowie
A4) gegebenenfalls weiteren Comonomeren,

wobei die Summe der Komponenten A1, A2 und A3 und gegebenenfalls A4 100 Gew.-% ergeben,
B) 0,1 bis 4,5 Gewichtsteile, bezogen auf die Gesamtmenge der eingesetzten Monomeren, vorzugsweise 0,5 bis 3,5 Gewichtsteile mindestens eines Schutzkolloids, vorzugsweise Polyvinylalkohol,
C) 0,1 bis 10 Gewichtsteile, bezogen auf die Gesamtmenge der eingesetzten Monomeren, vorzugsweise 0,5 bis 5,0 Gewichtsteile eines nichtionischen Emulgators, und
D) gegebenenfalls weitere für die Beschichtung von Lebensmitteln geeignete Zusätze.

Die Dispersion wird durch radikalische Emulsionspolymerisation hergestellt und eignet sich zur Beschichtung von Lebensmitteln. Die Verfilmungen aus diesen Dispersionen zeichnen sich durch eine niedrige Wasserdampftransmissionsrate aus.

EP 1 541 600 A1

**Beschreibung**

Polymerdispersionen mit verbesserter Wasserdampfsperrwirkung, deren Herstellung und Verwendung zur Lebensmittelbeschichtung

Die vorliegende Erfindung betrifft verbesserte Polymerdispersionen auf Basis von copolymeren Polyvinylestern zur Beschichtung von Lebensmitteln, welche sich durch eine verbesserte Wasserdampfsperrwirkung auszeichnen.

Der Einsatz von Polymerdispersionen, insbesondere auf der Basis von homo- oder copolymeren Polyvinylestern, wie Polyvinylacetat, ist zur Beschichtung von Lebensmitteln, insbesondere Hartkäse und Fleischprodukten, seit langem bekannt. Im Falle der Hartkäsebeschichtung werden die Dispersionen als Hilfsmittel für eine kontrollierte Käsereifung verwendet. Durch die Oberflächenbehandlung und das nachfolgende Auftrocknen der Dispersion wird ein gasdurchlässiger Wasserdampf-Barrierefilm generiert, der sowohl die Schimmelbildung auf dem Käse, als auch ein zu schnelles Austrocknen der Käselaibe während der Reifung verhindert. Während des Reifeprozesses durchlaufen die Käse eine mehrere Wochen bis Monate dauernde Lagerung in Feuchträumen. Dem unerwünschten Wachstum von Mikroorganismen wird dabei durch eine antimikrobielle Ausrüstung der Dispersionen mit speziellen Bioziden, wie zum Beispiel in EP-A-0 986 965 beschrieben, entgegengewirkt. Üblicherweise weisen die Filme der zur Käsereifung verwendeten Dispersionen unter Normklimabedingungen (23 °C, 50 % Luftfeuchte) bei einer Filmdicke von 300 μm Wasserdampftransmissionsraten von > 150 g/(m$^2$ · d) auf. Durch diese noch relativ hohe Wasserdampfpermeabilität ist gewährleistet, dass der Käse kontrolliert in Feuchträumen durch zeitlich gesteuerten Wasserverlust Rindenbildung, Konsistenz und Geschmack entwickeln kann, dabei jedoch nicht zu schnell austrocknet.

Ein Nachteil solcher handelsüblicher Dispersionen auf Basis von homo- oder insbesondere copolymerem Polyvinylacetat ist jedoch, dass diese Produkte wegen ihrer noch zu hohen Wasserdampfpermeabilität nur in begrenztem Umfang zur Beschichtung von anderen Lebensmitteln, wie beispielsweise Fleischwaren, Stangengemüsen oder Früchten, geeignet sind. Bei diesen Lebensmitteln handelt es sich um fertige, zum Teil länger lagerhaltige Endprodukte handelt, die ihr Gewicht und ihre Konsistenz durch Wasserverlust nicht verändern sollen. Diese Produkte kommen deswegen häufig in gas- und wasserdampfdicht versiegelten Folienumverpackungen (auch als Wärmeschrumpffolie, wie beispielsweise in JP-A 2002/240862 beschrieben) oder in Blisterverpackungen auf den Markt. Es wäre aus Gründen der vereinfachten Applikation (z.B. in Form eines Sprüh- oder Tauchauftrags) von Vorteil, auch diese Produkte mit Dispersionen beschichten zu können. Gleichzeitig könnte im selben Verfahrensschritt durch den einfachen Zusatz von Biociden oder UV-Absorbern zu der Dispersion eine biologische und chemische Stabilisierung der Produkte erzielt werden.

Am Markt fehlen also gegenwärtig universeller einsetzbare Produkte auf Basis homo- oder copolymerer Polyvinylester, insbesondere auf Basis von homo- oder copolymerem Polyvinylacetat, mit verringerter Wasserdampfpermeabilität, die gleichzeitig gegenüber den herkömmlichen Beschichtungsmitteln sowohl als Hilfsmittel für die Käsereifung, als auch als Verpackungsmaterial für andere Lebensmittel geeignet sind.

Die EP-A 0 167 477 beschreibt eine Verpackung für Lebensmittel, inbesondere für Gemüse, Obst, Käse, Fleisch- oder Wurstwaren, in Form einer direkt aufgetragenen Folie aus einem Mischpolymerisat. Zu den bevorzugt geeigneten Mischpolymerisaten zählen solche aus Vinylacetat/Vinyllaurat und aus Vinylacetat/Maleinsäureester. Die Applikation kann auch aus einer Emulsion erfolgen. Die Mischpolymerisatschicht bildet eine luft-, sauerstoff- und wasserdampfdichte Verpackung. Eine komplette Gasverriegelung ist jedoch für das angestrebte Produkt aus den oben erwähnten Gründen nicht wünschenswert.

Die US-A 3,298,855 beschreibt ein Verpackungsmaterial für Lebensmittel basierend auf einer Papierschicht, die unter anderem mit Blends von Polyethylen und Vinylacetat-Dibutylfumarat-Latices beschichtet wurden. Die erzielten Wasserdampftransmissionsraten von 16 bis 31 g/(m$^2$ · d) des Gesamtverbunds liegen bereits in einem günstigen Bereich, jedoch eignet sich dieses beschichtete Papier nur für eine Umverpackung und nicht für einen Direktauftrag. Ferner besitzen die zur Beschichtung verwendeten Blends in Dispersionsform aufgrund von stofflichen Inkompatibilitäten keine Lagerstabilität.

Die DE-A 40 12 953 beschreibt eine als schlauchförmige Wursthülle geeignete Kunststoff-Folie mit einer Verstärkung aus einem flächenförmigen Faserstoff, der zumindest auf einer seiner beiden Oberflächen eine Imprägnierung und gegebenenfalls einen Überzug aus einem Kunststoff aufweist, der im wesentlichen aus einem Mischpolymeren mit mindestens zwei verschiedenen monomeren Einheiten besteht, die aus der Gruppe der Vinylester, Maleinsäureester, Fumarsäureester, Acrylsäureester, Methacrylsäureester, linearen alpha-Olefinen mit 2 bis 8 C-Atomen und Styrol ausgewählt sind. Auch diese Dispersionen werden nicht direkt auf das Lebensmittel appliziert. Zudem weisen auch diese Verbunde hohe Wasserdampftransmissionsraten auf.

Die CH-419 816 beschreibt ein Verfahren zur Haltbarmachung von Lebensmitteln durch Aufbringen einer wässrigen Emulsion, die als Hauptbestandteil ein Copolymer enthält, welches einen elastischen Film bildet, der bis zu einer Temperatur von etwa 0° C geschmeidig bleibt und welcher Film die Ausatmung von Gasen und Wasser ermöglicht, jedoch ein Eindringen der Außenatmosphäre nach innen vollkommen verhindert, wodurch die Bakterien- und Schimmelbildung, sowie Gewichtsverluste weitgehend bis völlig verhindert werden. Geeignete wässrige Emulsionen enthalten Copolymere aus verschiedenen Monomeren, beispielsweise aus zweien oder mehreren von Vinylacetat, Ethylen und Maleinsäureester. Der technischen Beschreibung der Druckschrift ist jedoch zu entnehmen, dass die Verhinderung der Gewichtsverluste bei Hartkäse beim Lagern erst durch Applikation einer Plastikschrumpf-Folie über den Dispersionsüberzug erfolgt.

Die DE-AS 1 142 269 beschreibt die Verwendung von Polymerdispersionen und/oder -lösungen, insbesondere aus Mischpolymerisaten des Vinylidenchlorids, die bei Zimmertemperatur, höchstens aber 30 °C, einen Film bilden, dessen Flexibilität bis mindestens + 10 °C erhalten bleibt und der eine geringe Wasserdampf- und/oder Gasdurchlässigkeit aufweist, zum Auftragen auf die Oberflächen von Lebensmitteln, insbesondere Käse, Wurst und Schinken, in Mengen bis zu 5 mg/cm$^2$ Kunststofftrockensubstanz. Die Wasserdampftransmissionsraten betragen 3 - 15 g/(m$^2 \cdot$ d). Die nach dieser Erfindung behandelten Lebensmittel zeigen deutlich verringerte Schwundverluste. In der Offenbarung der DE-AS 1 142 269 ist die Rede von Mischpolymerisaten des Vinylidenchlorids. Weitere Einzelheiten über die chemische Zusammensetzung der Mischpolymerisate werden nicht offenbart.

Die DE-A 101 12 431 beschreibt eine ebenfalls für eine Lebensmittelbeschichtung beanspruchte wässrige Kunststoff-Dispersion auf Basis eines heterogen aufgebauten Vinylester-Copolymerisats P aus zwei Homo- oder Copolymerisaten A und B, die im wesentlichen durch ionische Komponenten stabilisiert ist, wobei die Homo- oder Copolymerisate A und B unabhängig voneinander (a) 50 bis 100 Gew.-% mindestens eines Vinylesters von Carbonsäuren mit 1 bis 18 C-Atomen und (b) 0 bis 25 Gew.-% mindestens eines monoethylenisch ungesättigten, gegebenenfalls halogen-substituierten Kohlenwasserstoffs mit 2 bis 4 C-Atomen, bezogen auf die Gesamtmasse der zur Herstellung des jeweiligen Homo- oder Copolymerisats A und B verwendeten Monomere, copolymerisiert enthalten, die, bezogen auf die Gesamtmasse der zur Herstellung des Vinylester-Copolymerisats P verwendeten Monomere, 0 bis 10 Gew.-% mindestens eines ethylenisch ungesättigten, ionischen Monomeren und 0 bis 5 Gew.-%, an ionischen Emulgatoren enthält, wobei die Gesamtmasse an ethylenisch ungesättigten, ionischen Monomeren und ionischen Emulgatoren mindestens 2 Gew.-% beträgt. Dieser Lösungsansatz besitzt einen geringen Anteil an hydrophilem Schutzkolloid, der bereits eine geringe Wasserdampftransmission erwarten lässt, führt jedoch aufgrund der mehrheitlich ionischen Stabilisierung mit ionischem Comonomer und/oder ionischem Emulgator zu unvorteilhaft niedrigen Viskositäten bei praxisnahen Feststoffgehalten von etwa 50 Gew. %, die für manche Einsätze als Lebensmittelbeschichtung nicht erwünscht sind.

Gegenstand der WO-A-03/054041 ist eine Lebensmittelbeschichtungsmasse enthaltend eine weichmacherfreie, wässrige copolymere Poly(vinylester)-Dispersion, die A) 100 Gewichtsteile eines Copolymerisates aus 40 bis 95 Gew.-% Vinylestern von aliphatischen, gesättigten Carbonsäuren, 5 bis 60 Gew.-% Maleinsäureestern und/oder Fumarsäureestern von einwertigen aliphatischen Alkoholen mit einer Kettenlänge von C$_1$-C$_{18}$, und gegebenenfalls weiteren Comonomeren, B) 0,1 bis 1,0 Gewichtsteile eines Emulgators, C) 1 bis 12 Gewichtsteile eines Gemisches von mindestens zwei Polyvinylalkoholen, bestehend zu mindestens 0,1 Gewichtsteilen aus mindestens einem Polyvinylalkohol vom Hydrolysegrad von 85 bis 90 Mol-% sowie mindestens 0,1 Gewichtsteilen aus mindestens einem Polyvinylalkohol vom Hydrolysegrad von über 90 Mol-%, vorzugsweise von 90,5 bis 94 Mol-%, und D) gegebenenfalls weitere Stabilisierungsmittel enthält.

Nach der WO-A-03/054041 hergestellte Produkte weisen jedoch nicht die gewünschte niedrige Wasserdampftransmission auf. Versuche zur Verbesserung dieser Eigenschaft schlugen fehl, da bei reduzierten Anteilen der zur Stabilisierung verwendeten Polyvinylalkohole die nötige kolloidale Stabilität verloren geht.

Der Erfindung lag demnach die Aufgabe zugrunde, Polymerdispersionen bereitzustellen, deren Verfilmungen sich gegenüber denen der herkömmlichen Beschichtungsmittel durch eine verringerte Wasserdampfpermeabilität mit Wasserdampftransmissionsraten von < 150 g/(m$^2 \cdot$ d), vorzugsweise < 120 g/(m$^2 \cdot$ d), insbesondere < 100 g/(m$^2 \cdot$ d) auszeichnen und die sich damit sowohl als Verpackungsmaterial für Lebensmittel eignen als auch als Überzüge für die Reifung von Lebensmitteln, beispielsweise von Wurstwaren oder Käse, eingesetzt werden können.

Überraschenderweise wurde nun gefunden, dass diese Aufgabe durch copolymere Polyvinylester-Dispersionen enthaltend ausgewählte Monomere in ausgewählten Mengen gelöst wird, die mittels ausgewählter Mengen eines gemischten Stabilisierungssystems hergestellt werden, welches mindestens ein Schutzkolloid, vorzugsweise Polyvinylalkohol, und mindestens einen nichtionischen Emulgator enthält. Ein weiterer Teil des Stabilisierungssystems wird durch ein copolymerisierbares Stabilisierungsmittel dargestellt.

Gegenstand der vorliegenden Erfindung ist somit eine wässrige copolymere Polyvinylester-Dispersion, enthaltend

A) 100 Gewichtsteile eines Copolymerisats abgeleitet von

A1 ) 34,9 bis 95 Gew.-% Vinylestern von aliphatischen, gesättigten Carbonsäuren, vorzugsweise Fettsäuren mit einer Kettenlänge von C$_1$-C$_{18}$, insbesondere Vinylacetat,

A2) 4,9 bis 65 Gew.-% Maleinsäureestern und/oder Fumarsäureestern von einwertigen aliphatischen Alkoholen mit einer Kettenlänge von $C_1$-$C_{18}$, insbesondere Dialkylmaleinat und/oder -fumarat, und/oder alpha-Olefinen mit 2 bis 8 C-Atomen, insbesondere Ethylen, ganz besonders bevorzugt Dibutylmaleinat und/oder -fumarat,

A3) 0,1 bis 10 % mindestens einem Comonomeren mit mindestens einer stabilisierenden nichtionischen oder ionischen Gruppe, sowie

A4) gegebenenfalls weiteren Comonomeren,

wobei die Summe der Komponenten A1, A2 und A3 und gegebenenfalls A4 100 Gew.-% ergeben,

B) 0,1 bis 4,5 Gewichtsteile, bezogen auf die Gesamtmenge der eingesetzten Monomeren, vorzugsweise 0,5 bis 3,5 Gewichtsteile mindestens eines Schutzkolloids, vorzugsweise Polyvinylalkohol,

C) 0,1 bis 10 Gewichtsteile, bezogen auf die Gesamtmenge der eingesetzten Monomeren, vorzugsweise 0,5 bis 5,0 Gewichtsteile eines nichtionischen Emulgators, und

D) gegebenenfalls weitere für die Beschichtung von Lebensmitteln geeignete Zusätze.

Die erfindungsgemäße wässrige copolymere Polyvinylester-Dispersion zeichnet sich durch niedrige Wasserdampftransmissionsraten ihrer Verfilmungen aus. Vorzugsweise beträgt die Wasserdampftransmissionsrate ihrer Verfilmung < 150 g/(m$^2$ · d), besonders bevorzugt < 120 g/(m$^2$ · d), und insbesondere < 100 g/(m$^2$ · d) (d = 24 Stunden).

Bei den Vinylestern A1 von aliphatischen gesättigten Carbonsäuren der Kettenlänge $C_1$-$C_{18}$ handelt es beispielsweise um Vinylformiat, Vinylacetat, Vinylpropionat, Vinylbutyrat, Vinylisobutyrat, Vinylpivalat, Vinyl-2-ethyl-hexanoat, Vinylester von $\alpha$-verzweigten Carbonsäuren mit 9 bis 11 Kohlenstoffatomen im Säurerest (®Versaticsäuren), die Vinylester der Laurin-, Palmitin-, Myristin- und Stearinsäure. Der Anteil dieser Vinylester im Copolymerisat beträgt mindestens 34,9 Gew.-%, vorzugsweise mindestens 40 Gew.-%, ganz besonders bevorzugt 40 bis 65 Gew.-%.

Die Verwendung der Vinylester aliphatischer Fettsäuren ist bevorzugt, darunter insbesondere Vinylacetat. Die Vinylester A1 können im Polyvinylester auch in Kombination von zwei oder mehreren davon nebeneinander vorliegen.

Bei den Maleinsäure- und Fumarsäureestern A2 von einwertigen aliphatischen Alkoholen der Kettenlänge $C_1$-$C_{18}$ handelt es sich um solche von gesättigten Alkoholen der Kettenlänge $C_1$-$C_{18}$ oder um solche mit einwertigen aliphatischen ungesättigten Alkoholen der Kettenlänge $C_3$-$C_{18}$, vorzugsweise jedoch um solche mit gesättigten Alkoholen der Kettenlänge $C_4$-$C_8$, insbesondere um Dibutylmaleinat oder um Di-2-ethylhexylmaleinat und/oder -fumarat.

Der Anteil dieser Monomeren A2, gegebenenfalls in Kombination mit weiteren Comonomeren aus dieser Gruppe, beträgt 4,9 bis 65 Gew.-%, vorzugsweise 10 bis 60 Gew. %, ganz besonders bevorzugt 20 bis 55 Gew.-%.

Bei den alpha-Olefinen mit 2 bis 8 C-Atomen A2 handelt es sich um verzweigte oder um geradkettige alpha-Olefine, beispielsweise um Prop-1-en, But-1-en, Pent-1-en, Hex-1-en, Hept-1-en, Oct-1-en und insbesondere um Ethylen,

Bevorzugt eingesetzte Comonomere A2 sind Maleinsäure- und/oder Fumarsäureester oder Ethylen.

Die Verwendung von Dibutylmaleinat und/oder -fumarat ist besonders bevorzugt.

Die Comonomeren A2 können im Polyvinylester auch in Kombination von zwei oder mehreren davon nebeneinander vorliegen.

Geeignete Comonomere der Gruppe A3 besitzen mindestens eine stabilisierende nichtionische oder ionische Gruppe, vorzugsweise eine Säuregruppe im Molekül, die das Emulsionspolymer zusätzlich über polymergebundene funktionelle Gruppen und/oder Ladungen stabilisieren.

Die Menge der stabilisierenden Comonomeren A3, gegebenenfalls in Kombination mit weiteren Comonomeren aus dieser Monomergruppe, beträgt 0,1 bis 10 Gew.-% , vorzugsweise 0,5 bis 8 Gew.-% an der gesamten Copolymerzusammensetzung A).

Die Comonomeren A3 können im Polyvinylester auch in Kombination von zwei oder mehreren davon nebeneinander vorliegen.

Unter stabilisierenden nichtionischen Gruppen sind im Rahmen dieser Beschreibung Gruppen zu verstehen, die sich von Polyalkylenglykolen ableiten oder die Amidgruppen und/oder Hydroxyalkylgruppen sind. Dabei handelt es sich insbesondere um Estergruppen mit Polyalkylenglykolen, um Estergruppen mit Aminoalkoholen, um Estergruppen mit zwei- oder mehrwertigen Alkoholen, bei denen nur eine Alkoholgruppe verestert ist sowie um Amidgruppen einschließlich der Lactame.

Unter stabilisierenden ionischen Gruppen sind im Rahmen dieser Beschreibung Gruppen zu verstehen, die in der erfindungsgemäßen wässrigen Dispersion in Form von ionisierten Resten vorliegen und die in verdünnten wässrigen Lösungen beim pH Wert 2 und/oder 11 zu mehr als 50 %, vorzugsweise zu mehr als 80 %, als ionische Verbindung vorliegen.

Als Comonomere A3 mit stabilisierenden nichtionischen Gruppen eignen sich insbesondere Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acryl-säureester mit Dimethylaminoethanol, sowie (Meth)acrylsäureester mit zweiwertigen aliphatischen Alkoholen der Kettenlänge $C_2$-$C_{18}$, bei denen nur eine Alkoholgruppe verestert ist. Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Als Comonomere A3 mit stabilisierenden ionischen Gruppen eignen sich ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden. Beispiele dafür sind Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge $C_1$-$C_{18}$ sowie deren Alkali- und Ammoniumsalze oder (Meth)acrylsäureester von Sulfoalkanolen, beispielsweise Natrium-2-sulfoethylmethacrylat.

Besonders geeignet sind Halbester der Malein- bzw. Fumarsäure und der Itaconsäure mit einwertigen aliphatischen gesättigten Alkoholen der Kettenlänge $C_1$-$C_{18}$ sowie deren Alkali- und Ammoniumsalze. Hierzu gehören die Säuren oder Salze von Mono-n-methylmaleinat- oder -fumarat, Mono-n-ethylmaleinat- oder -fumarat, Mono-n-propylmaleinat- oder -fumarat, Mono-n-butylmaleinat- oder -fumarat , Monoisobutylmaleinat- oder -fumarat, Mono-n-pentylmaleinat- oder -fumarat, Monon-hexylmaleinat- oder -fumarat, Monocyclohexylmaleinat- oder -fumarat, Mononheptylmaleinat- oder -fumarat, Mono-n-octylmaleinat- oder -fumarat, Mono-(2-ethylhexyl)-maleinat- oder -fumarat, Mono-n-nonylmaleinat- oder -fumarat, Mono-ndecylmaleinat- oder -fumarat, Mono-n-undecylmaleinat- oder -fumarat, Monolaurylmaleinat- oder -fumarat, Monomyristiylmaleinat- oder -fumarat, Monopalmitoylmaleinat- oder -fumarat, Mono-stearylmaleinat- oder -fumarat, beziehungsweise deren Analoga der Itaconsäure.

Zu weiteren Comonomeren A4, die im Copolymerisat Verwendung finden können, sind beliebige Comonomere einsetzbar, die nicht den Gruppen A1, A2 oder A3 angehören. Beispiele dafür sind Ester aliphatischer Carbonsäuren der Kettenlänge $C_3$-$C_{12}$ mit ungesättigten Alkoholen der Kettenlänge $C_3$-$C_{18}$, die Acrylsäure- und Methacrylsäureester von einwertigen aliphatischen gesättigten Alkoholen, Vinylchlorid, Vinylidenchlorid, Acrylnitril und Methacrylnitril, Butadien, Isopren, $C_9$-$C_{16}$ alpha-Olefine, 2-Chlorbutadien, 2,3-Dichlorbutadien, Tetrafluorethylen, Styrol, Vinylether von einwertigen aliphatischen gesättigten Alkoholen der Kettenlänge $C_1$-$C_{18}$, Divinyl- und Diallylester von gesättigten und ungesättigten aliphatischen Dicarbonsäuren der Kettenlänge $C_3$-$C_{18}$, Vinyl- und Allylester der Acrylsäure und Crotonsäure und Triallylcyanurat. Bevorzugt sind als weitere Comonomere A4 Acrylsäureester einwertiger aliphatischer gesättigter Alkohole der Kettenlänge $C_4$-$C_8$ oder $C_{14}$-$C_{16}$ alpha-Olefine oder Butadien.

Die Menge der Monomergruppe A4, gegebenenfalls in Kombination mit weiteren Comonomeren aus dieser Monomergruppe, beträgt typischerweise 0 bis 15 Gew.-%, vorzugsweise 0 bis 10 Gew.-%.

Vorzugsweise werden jedoch neben den drei obengenannten Monomer-Gruppen A1 bis A3 keine weiteren Comonomere verwendet.

Als Schutzkolloid B), also als polymerer Stabilisator, eignen sich Methylcellulosen, Hydroxyethyl- und Propylcellulosen sowie Natriumcarboxy-methylcellulose, Gelatine, Kasein, Stärke, Gummi arabicum, Hydroxyethylstärke, Natriumalginat, sowie Homooder Copolymerisate mit Monomereinheiten abgeleitet von den Monomeren A1 bis A3, vorzugsweise A1 und/oder A3, wie z.B. Vinylester, (Meth)acrylsäuren und/oder - ester sowie N-Vinylamide, einschließlich der N-Vinyllactame und/oder die wasserlöslichen Salze dieser Homo- oder Copolymeren. Beispiele für (Meth)acrylsäuren sind Polyacrylsäure und/oder Polymethacrylsäure. Beispiele für N-Vinylamide sind Polyvinylpyrrolidon und N-Vinylacetamid.

Das bevorzugte Schutzkolloid ist Polyvinylalkohol. Geeigneter Polyvinylalkohol besitzt Hydrolysegrade von 60 bis 100 mol-% und Viskositäten der 4 %igen wässrigen Lösungen bei 20 °C von 2 - 70 mPa*s, insbesondere 30 bis 70 mPa*s.

Vorzugsweise wird mindestens ein höhermolekularer Poly(vinylalkohol) vom Hydrolysegrad von 85 - 92 mol-% mit einer Viskosität der 4 %igen wässrigen Lösungen bei 20 °C von 30 bis 70 mPa*s verwendet.

Die genannten Schutzkolloide können selbstverständlich, auch in Form von Gemischen verwendet werden.

Besonders bevorzugt wird Polyvinylalkohol als Schutzkolloid eingesetzt, wobei vorwiegend der oben beschriebene höhermolekularer Polyvinylalkohol zum Einsatz kommt, der gegebenenfalls noch geringe Mengen, beispielsweise bis zu 10 Gew. %, bezogen auf die Gesamtmenge des eingesetzten Schutzkolloids, an anderen Schutzkolloiden aufweist.

Der bevorzugt eingesetzte höhermolekulare Polyvinylalkohol liegt bevorzugt zu mindestens 60 Gew. %, bezogen auf die Gesamtmenge des eingesetzten Schutzkolloids, ganz besonders bevorzugt zu 75 bis 100 Gew. % im Schutzkolloid vor.

Die verwendete Menge der Schutzkolloide, bezogen auf das Copolymer A), beträgt 0,1 bis 4,5 Gewichtsteile, vorzugsweise 0,25 bis 4,0 Gewichtsteile, insbesondere 0,5 bis 3,5 Gewichtsteile und ganz besonders bevorzugt 0,5 bis 2,95 Gewichtsteile.

Als nichtionische Emulgatoren C) eignen sich insbesondere Acyl-, Alkyl-, Oleyl- und Alkylaryloxethylate. Diese Produkte sind beispielsweise im Handel unter der Bezeichnung Genapol® oder Lutensol® erhältlich. Hierunter fallen beispielsweise ethoxilierte Mono-, Di- und Tri-Alkylphenole (EO-Grad: 3 bis 50, Alkylsubstituentenrest: $C_4$ bis $C_{12}$) sowie ethoxilierte Fettalkohole (EO-Grad: 3 bis 80; Alkylrest: $C_8$ bis $C_{36}$), speziell $C_{12}$-$C_{14}$-Fettalkohol(3-8)ethoxilate, $C_{13}C_{15}$-Oxoalkohol(3-30)ethoxilate, $C_{16}C_{18}$-Fettalkohol(11-80)ethoxilate, $C_{10}$-Oxoalkohol(3-11)ethoxilate, $C_{13}$-Oxoalkohol(3-20)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-20)-Ether von Oleylalkohol sowie die Polyethenoxid(4-20)-Ether von Nonylphenol. Besonders geeignet sind die Polyethylenoxid(4-20)-Ether von Fettalkoholen, insbesondere von Oleylalkohol. An nichtionischen Emulgatoren werden 0,1 bis 10 Gewichtsteile, vorzugsweise 0,5 bis 5,0 % bezogen auf das Copolymer A) verwendet. Es lassen sich auch Gemische von nichtionischen Emulgatoren einsetzen.

Zur weiteren Verbesserung der Stabilität ist es auch möglich, weitere, in diesem Fall ionische, vorzugsweise anionische Stabilisatoren als Co-Emulgator mitzuverwenden. Beispielhaft genannt seien Natrium-, Kalium- und Ammoniumsalze von geradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs- und/oder Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate Dimethyldialkyl($C_8$-$C_{18}$)-ammoniumchlorid, und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylen-glykolethern von einwertigen aliphatischen Alkoholen der Kettenlänge $C_{10}$-$C_{12}$ (Di-Natriumsalz), Sulfobernsteinsäure-4-Ester mit Polyethylenglykolnonyl-phenylether (Di-Natriumsalz), Sulfobernsteinsäure-bis-cyclohexylester (Natriumsalz), Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenyletherdisulfonsaures Natrium sowie Natriumlaurylsulfat, oder ethoxyliertes Natriumlaurylethersulfat (EO-Grad 3)

Es lassen sich auch Gemische von ionischen Emulgatoren einsetzen.

Gegebenenfalls anwesende zusätzliche ionische Emulgatoren werden in Bezug auf die nichtionischen Emulgatoren im Unterschuss eingesetzt. Typischerweise beträgt der Anteil an ionischen Emulgatoren, bezogen auf die Gesamtmenge der eingesetzten Emulgatoren, bis zu 40 Gew. %, vorzugsweise weniger als 10 Gew. %.

Besonders bevorzugt werden neben nichtionischen Emulgatoren keine weiteren ionischen Emulgatoren eingesetzt.

Die erfindungsgemäßen wässrigen copolymeren Polyvinylester-Dispersionen besitzen nach ihrer Herstellung typischerweise eine Viskosität von mindestens 1,5 Pa*s (gemessen bei 20°C mit einem Brookfield RVT Viskosimeter), vorzugsweise von mindestens 2 Pa*s, insbesondere von 3 bis 20 Pa*s. Diese Viskositäten lassen sich durch Konfektionierung bei Bedarf in an sich bekannter Weise verringern oder vergrößern, um die Zusammensetzung auf die gewünschte Anwendungsform einzustellen.

Der Feststoffgehalt der erfindungsgemäßen wässrigen copolymeren Polyvinylester-Dispersionen beträgt 20 bis 70 Gew.-%, vorzugsweise 30 bis 65 Gew.-%, und besonders bevorzugt 40 bis 60 Gew.-%.

Die minimale Filmbildetemperatur der erfindungsgemäßen Dispersionen liegt typischerweise unter 25 °C, vorzugsweise unter 15 °C. Die Filmbildetemperatur kann durch Zusatz an sich bekannter Koaleszenzmittel modifziert und gezielt eingestellt werden.

Die erfindungsgemäßen wässrigen copolymeren Polyvinylester-Dispersionen führen in vorteilhafter Weise zu einem bislang neuen anwendungstechnischen Eigenschaftsbild. Gleichzeitig weisen die Dispersionen die nötige kolloidale Stabilität und Rheologie auf.

Die erfindungsgemäßen wässrigen copolymeren Polyvinylester-Dispersionen zeichnen sich neben einer ausgezeichneten Lagerstabilität durch eine für den Anwendungsfall sehr günstige Viskosität aus, so dass sich durch einfache Maßnahmen daraus Filme herstellen lassen, die ihrerseits eine gegenüber vorbekannten Lösungen verringerte Wasserdampftransmissionsraten besitzen.

Dieses Eigenschaftsprofil wird hauptsächlich durch die Auswahl der Monomerkombination des Copolymers A) enthaltend geringe Mengen von ionischen Comonomeren A3 abgeleiteter Einheiten, den relativ niedrigen Gehalt an Schutzkolloid B) und die Anwesenheit des nichtionischen Emulgators C) bestimmt.

Die Verfilmungen der erfindungsgemäßen wässrigen copolymeren Polyvinylester-Dispersionen zeichnen sich beim Einsatz als Überzugsmasse von Lebensmitteln gegenüber den herkömmlichen Beschichtungsmitteln neben einer für den Anwendungsfall günstigen Viskosität durch eine verringerte Wasserdampfpermeabilität mit Wasserdampftransmissionsraten von < 150 g/($m^2 \cdot$ d), vorzugsweise < 120 g/($m^2 \cdot$ d), insbesondere < 100 g/($m^2 \cdot$ d), vielfach auch deutlich darunter aus. Weiterhin werden die für die Applikation als Käsedeckmasse wichtigen erforderlichen Anforderungen an Filmglanz und Wachshaftung voll erfüllt.

Somit sind die erfindungsgemäßen Dispersionen imstande, sich sowohl als verbessertes Hilfsmittel für die Reifung von Lebensmitteln, wie die Käsereifung, als auch als Beschichtungs- und Verpackungsmaterial für Lebensmittel zu eignen.

Gegenstand dieser Erfindung ist weiterhin ein Verfahren zur Herstellung der erfindungsgemäßen Dispersionen mittels radikalischer Emulsionscopolymerisation.

Die Erfindung betrifft daher auch ein Verfahren zur Herstellung von wässrigen copolymeren Polyvinylester-Dispersionen umfassend die radikalische Emulsionspolymerisation von

i) 34,9 bis 95 Gew.-% Vinylestern von aliphatischen, gesättigten Carbonsäuren (A1),

ii) 4,9 bis 65 Gew.-% Maleinsäureestern und/oder Fumarsäureestern von einwertigen aliphatischen Alkoholen mit einer Kettenlänge von $C_1$-$C_{18}$ und/oder alpha-Olefinen mit 2 bis 8 C-Atomen (A2),

iii) 0,1 bis 10 % mindestens eines Comonomeren mit mindestens einer stabilisierenden nichtionischen oder ionischen Gruppe (A3), sowie

iv) gegebenenfalls weiteren Comonomeren (A4),

wobei die Summe der Komponenten A1, A2 und A3 und gegebenenfalls A4 100 Gew.-% ergeben, in Gegenwart von

v) 0,1 bis 4,5 Gewichtsteilen, bezogen auf die Gesamtmenge der eingesetzten Monomeren, mindestens eines Schutzkolloids, und

vi) 0,1 bis 10 Gewichtsteilen, bezogen auf die Gesamtmenge der eingesetzten Monomeren, nichtionischen Emulgators.

Diese Polymerisation kann im Batchverfahren, im Zulaufverfahren, oder kombinierten Batch/Zulauf-Verfahren oder in kontinuierlichen Schlaufenreaktoren oder Rührkesselkaskaden durchgeführt werden.

Vorzugsweise wird jedoch im kombinierten Batch/Zulauf-Verfahren oder besonders bevorzugt, im Zulaufverfahren gearbeitet, wobei üblicherweise ein Teil der Monomeren (1 bis 15 Gew.-%) zum Starten der Polymerisation vorgelegt werden. Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen eine Saatpolymerisation durchzuführen.

Als radikalische Initiatoren werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge $C_8$-$C_{12}$, Tertiärbutylhydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsysteme verwendet werden, wobei Übergangsmetallsalze wie Eisen-II-salze oder andere Reduktionsmittel mitverwendet werden. Als Reduktionsmittel bzw. Regler können Alkalisalze der Oxymethansulfinsäure, Mercaptane der Kettenlänge $C_{10}$-$C_{14}$, Buten-(I)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Die während der Polymerisation zur Stabilisierung verwendeten Comonomeren A3) mit mindestens einer stabilisierenden nichtionischen oder ionischen Gruppe (und/oder gegebenenfalls weitere Comonomere) werden entweder ganz zu Beginn der Polymerisation vorgelegt, oder partiell vorgelegt und partiell dosiert oder komplett während der Polymerisation zudosiert. Es ist in bestimmten Ausführungsformen möglich, diese Zudosierung entweder linear oder in speziell angepassten Dosierprofilen, beispielsweise in Form einer Gradientenfahrweise vorzunehmen. Dadurch können funktionelle Gruppen gezielt an Teilchenoberflächen angereichert werden, was in den meisten Fällen eine weitere Stabilisierung der Dispersionen bedeutet.

Das zur Stabilisierung verwendete Schutzkolloid oder die Schutzkolloide, vorzugsweise der Polyvinylalkohol B), kann ebenfalls entweder zu Beginn der Polymerisation komplett vorgelegt oder partiell vorgelegt und partiell dosiert oder komplett während der Polymerisation zudosiert werden, wobei allerdings in einer bevorzugten Ausführungsform die Komponente B) komplett vorgelegt wird.

Der oder die zur Stabilisierung mitverwendete(n) nichtionische Emulgator oder die nichtionischen Emulgatoren C) können ebenfalls entweder zu Beginn der Polymerisation komplett vorgelegt oder partiell vorgelegt und partiell dosiert oder komplett während der Polymerisation zudosiert werden. In einer bevorzugten Ausführungsform wird diese Komponente partiell vorgelegt und partiell dosiert. Dasselbe gilt prinzipiell für die Mitverwendung eines oder mehrerer weiterer ionischer Coemulgatoren.

Der pH-Wert der Dispersion liegt typischerweise zwischen 2 und 7, vorzugsweise zwischen 2,5 und 6.

Die Polymerisationstemperatur bewegt sich typischerweise im Bereich von 20 bis 120°C, vorzugsweise im Bereich von 30 bis 110°C und ganz besonders bevorzugt im Bereich von 45 bis 95°C.

Nach Abschluss der Polymerisation kann zur Entmonomerisierung eine weitere, vorzugsweise chemische Nachbehandlung, insbesondere mit Redoxkatalysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d. h. destillative Entfernung (insbesondere über Wasserdampfdestillation) oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm gestattet.

Die erfindungsgemäße Dispersion kann nach ihrer Herstellung mit Additiven D) konfektioniert werden. Hierunter fallen beispielsweise Verbindungen, welche als Verdicker geeignet sind. In erste Linie ist hier wiederum Polyvinylalkohol und Celluloseether zu nennen, die zusätzlich zu den als Schutzkolloid eingesetzten Verbindungen nach der Beendigung der Polymerisation bzw. bevorzugt nach Entmonomerisierung zur Einstellung einer geeigneten Applikationsviskosität zugesetzt werden. Art und Menge dieser Additive sind dabei so zu wählen, dass die aus konfektionierten Zusammensetzung hergestellten Verfilmungen die gewünschten niedrigen Wasserdampftransmissionsraten aufweisen.

Als weitere Additive bzw. Stabilisierungsmittel zur Herstellung der Dispersion eignen sich Methylcellulosen, Hydroxyethyl- und Propylcellulosen sowie Natriumcarboxy-methylcellulose. Diese können prinzipiell zur Anpassung spezifischer Eigenschaften wie Glanz und Wasserdampftransmissiondurchlässigkeit sowie zur Stabilitätsverbesserung mitverwendet werden. In diese Verbindungsgruppe fallen Gelatine, Kasein, Stärke, Gummi arabicum, Hydroxyethylstärke, Natriumalginat, Lactose, Siliciumdioxid sowie Homo- oder Copolymerisate aus den zur Herstellung des Copolymerisats A) verwendeten Polymeren, bzw. ihrer wasserlöslichen Salze, beispielsweise Polyacrylsäure und Polyvinylpyrrolidon.

Der Dispersion können am Ende noch weitere Hilfsstoffe D) zugesetzt werden. In diese Gruppe fallen beispielsweise die genannten Stabilisierungsmittel. Als Zusätze eignen sich selbstverständlich auch niedermolekulare Stabilisatoren wie Neutralisierungsmittel und Komplexbildner. Beispielhaft genannt seien Alkali-, Ammonium-, Calciumhydroxide, -carbonate, -phosphate, Alkalisalze der Ethylendiamintetraessigsäure und N-Hydroxyethylethylendiamin-tri-essigsäure, Zitronensäure, sowie Natriumacetat und Phosphorsäure, Ammoniumchlorid, Natriumsulfat, Homopolymerisat aus 2-Acrylamido-2-methyl-propansulfon-säure und ihrer Natrium-, Kalium- und Ammoniumsalze, sowie Biozide, d.h. Stoffe zum Schutze der Dispersion und/oder des verpackten Substrats gegen mikrobiellen Befall. Es können aber auch weitere beliebige Polymerdispersionen, insbesondere Polyvinylester-Dispersionen, zugesetzt werden, sofern dadurch die Wasserdampftransmissionsrate des erzeugten Films nicht unter den gewünschten Wert absinkt. Vorzugsweise werden Konservierungsmittel verwendet, die in den einschlägigen Verordnungen zu lebensmittelrechtlichen Vorschriften über Zusatzstoffe für Käse bzw. den anderen zu beschichtenden Lebensmitteln zugelassen sind.

Wird die Dispersion zu einer Masse zur Beschichtung von Lebensmitteln konfektioniert, können die in den einschlägigen Positivlisten zugelassenen Farbstoffe wie Karoten (E 160a), Annato (E 160b), Carbo Medicinalis vegetabilis (E 153), Titandioxid (E 171), Tartrazin (E 102), Chinolingelb (E 104), Sonnengelb FCF (E 110), Cochenillerot A (E 124), Indigotin (E 132), Brillantschwarz BN (E 151) oder Litholrubin BK (E 180) verwendet werden.

Eine besonders bevorzugte Auswahl der verwendeten Rohstoffe zur Herstellung der Dispersion und zur Konfektionierung entspricht den Richtlinien der holländischen Warenwet B.1.4 und/oder der XVI. Empfehlung Teil B der BgVV.

Die erfindungsgemäßen wässrigen copolymeren Polyvinylester-Dispersionen eignen sich aufgrund der reduzierten Wasserdampftransmissionsrate und der günstigen Viskositätswerte nicht nur als Hilfsmittel für die Käsereifung, sondern auch als Beschichtungsmittel und/oder als Verpackungsmaterial für Lebensmittel aller Art, insbesondere für Fleisch- und Wurstwaren, für Gemüse, insbesondere Stangengemüse, für Früchte, vorzugsweise Hartschalenfrüchte, insbesondere Citrusfrüchte, für Saatgut und für Käse. Darüber hinaus eignen sie sich zur Herstellung von Beschichtungen als Hilfsmittel bei der Herstellung von Lebensmitteln, insbesondere von Käse.

Diese Verwendungen sind ebenfalls Gegenstand der vorliegenden Erfindung. Die nachfolgenden Beispiele dienen der Erläuterung der Erfindung. Die in den Beispielen angegebenen Teile und Prozente beziehen sich auf das Gewicht, soweit nicht anders vermerkt.

Herstellung von Dispersionen für erfindungsgemäße Lebensmittelbeschichtungsmittel

Beispiel 1

In einem zylindrischen Glasrührkesselreaktor mit Heiz/Kühlbad, Ankerrührer, Dosiervorrichtungen und Rückflusskühler wurden in 65,5 Teilen entionisiertem Wasser 2 Teile PVA BP-26 (teilverseifter Polyvinylalkohol der Firma Chang-Chun Petrochemical Co., Ltd. vom Hydrolysegrad 86 - 89 Mol- % und einer mittleren Viskosität von 50 - 58 mPa·s, gemessen in 4 %-iger wässriger Lösung bei 20 °C) sowie 1,0 Teile ®Genapol O-200 (ethoxilierter Oleylalkohol der Firma Clariant GmbH mit einem mittleren Ethoxilierungsgrad von 20 mol Ethylenoxid) zusammen mit 0,1 Teilen wasserfreiem Natriumacetat suspendiert und anschließend bei einer Temperatur von mindestens 80 °C gelöst. Diese Lösung wurde über Nacht auf Raumtemperatur abgekühlt. Vor der Polymerisation wurden 0,1 Teile Eisessig zugesetzt und der Versuchsansatz aufgeheizt. Bei 65 °C wurden 10 Teile von insgesamt 100 Teilen Monomergemisch in den Flotte gegeben. Dieses bestand aus 5,75 Teilen Vinylacetat und jeweils 2,125 Teilen Di-n-butylmaleinat und Mono-2-ethylhexylmaleinat. Der Reaktionsstart erfolgte durch Zusatz von 0,18 Teilen Ammoniumperoxodisulfat in 1,8 Teilen deionisiertem Wasser. Nach der Anpolymerisation (ca. 15 Minuten) wurde das restliche Monomergemisch, bestehend aus 49,25 Teilen Vinylacetat, 38,625 Teilen Dibutylmaleinat und 2,125 Teilen Mono-2-ethylhexylmaleinat innerhalb von 4 Stunden zudosiert. Gleichzeitig wurde eine Lösung von 0,05 Teilen Ammoniumperoxodisulfat, 1 Teil Genapol O-200 und 0,18 Teilen Natriumbicarbonat in 20 Teilen Wasser parallel zudosiert. Die Reaktionstemperatur wurde während dieser Zeit bei 70 bis 72 °C gehalten. Nach dem Ende der Zuläufe wurden 0,05 Teile Ammoniumperoxodisulfat in 1 Teilen Wasser zugesetzt und anschließend bis ca. 90 °C 1 Stunde nachpolymerisiert. Zur Reduktion der Restmonomeren wurde in der Abkühlphase durch Zusätze von 0,01 Teilen einer handelsüblichen 70 %-igen Lösung von tert. -Butylhydroperoxid (bei 80 °C) und 0,075 Teilen Ascorbinsäure (bei 75 °C) in je 1,7 Teilen Wasser nachpolymerisiert. Zur Einstellung eines pH-Wertes im Bereich von 4-5 wurde der fertigen Dispersion bei Raumtemperatur noch 1,5 Teile 10 %-ige Natronlauge zugesetzt. Man erhielt Koagulat-freie Dispersionen mit den in Tabelle 1 aufgeführten Prüfergebnissen.

Beispiel 2

Beispiel 2 wurde analog zu Beispiel 1 hergestellt, mit dem Unterschied, dass das zudosierte Monomergemisch aus 54,25 Teilen Vinylacetat, 33,625 Teilen Dibutylmaleinat und 2,125 Teilen Mono-2-ethylhexylmaleinat bestand.

Beispiel 3

Beispiel 3 wurde analog zu Beispiel 1 hergestellt, mit dem Unterschied, dass in der wässrigen Vorlage statt 1 Teil Genapol O-200 2 Teile Genapol O-200 verwendet wurden und das zudosierte Monomergemisch aus 52,25 Teilen Vinylacetat, 33,625 Teilen Dibutylmaleinat und 4,125 Teilen Mono-2-ethylhexylmaleinat bestand und statt 1 Teil Genapol O-200 ebenfalls 2 Teile Genapol O-200 in der Dosierung verwendet wurden.

Beispiel 4

Beispiel 4 wurde analog zu Beispiel 1 hergestellt, mit dem Unterschied, dass in der wässrigen Vorlage statt 1 Teil Genapol O-200 2 Teile Genapol O-200 verwendet wurden und bei identischem Monomergemisch statt 1 Teil Genapol O-200 ebenfalls 2 Teile Genapol O-200 in der Dosierung verwendet wurden.

Beispiel 5

Beispiel 5 wurde analog zu Beispiel 1 hergestellt, mit dem Unterschied, dass in der wässrigen Vorlage statt 2 Teilen PVA BP-26 nur 1,5 Teile PVA BP 26 sowie statt 1 Teil Genapol O-200 1 Teil Genapol O-120 verwendet wurde und das zudosierte Monomergemisch aus 39,25 Teilen Vinylacetat, 48,625 Teilen Dibutylmaleinat und 2,125 Teilen Mono-2-ethylhexylmaleinat bestand und dass statt 1 Teil Genapol O-200 1 Teil Genapol O-120 in der Dosierung verwendet wurden.

Beispiel 6

Beispiel 6 wurde analog zu Beispiel 1 hergestellt, mit dem Unterschied, dass in der wässrigen Vorlage statt 2 Teilen PVA BP-26 nur 1,5 Teile PVA BP 26 sowie statt 1 Teil Genapol O-200 1 Teil Genapol O-120 verwendet wurde und das zudosierte Monomergemisch aus 44,25 Teilen Vinylacetat, 43,625 Teilen Dibutylmaleinat und 2,125 Teilen Mono-2-ethylhexylmaleinat bestand und dass statt 1 Teil Genapol O-200 1 Teil Genapol O-120 in der Dosierung verwendet wurden.

Vergleichsbeispiel V1

Bei dem Vergleichsbeispiel V1 handelt es sich um Mowilith™ SDM 4230 KL, einer handelsüblichen Dispersion der Firma Celanese Emulsions GmbH zur Lebensmittel-, insbesondere zur Käsebeschichtung, die auf Vinylacetat-Maleinatbasis beruht und mit Polyvinylalkohol stabilisiert ist.

Anwendungstechnische Prüfung als Beschichtungsmittel für Käse

Verwendete anwendungstechnische Untersuchungsmethoden für die Ausprüfung als Lebensmittelbeschichtungsmasse

Messung des Filmglanzes

Die Messung des Filmglanzes erfolgte mit einem Dr. Lange Labor-Reflektometer RL 3 der Firma Dr. Bruno Lange GmbH. Die zu untersuchenden Proben wurden mit einer Nassschichtdicke von 300 μm mit Hilfe eines Kastenrakels der Firma Erichsen auf eine Glasplatte aufgezogen und anschließend 24 Stunden bei Raumtemperatur getrocknet. Das Laborreflektometer wird mit Hilfe des Kalibrierstandards A (polierte, hochglänzende Schwarzglasplatte) zunächst kalibriert. Der Messkopf des Reflektometers wird auf die Oberfläche der zu untersuchenden Probe aufgesetzt und die Messung ausgelöst. Das Reflektometer misst nacheinander bei verschiedenen Einfallswinkeln. Die Messung wird als Dreifachbestimmung an drei verschiedenen Aufsetzpunkten auf der zu untersuchenden Oberfläche durchgeführt und der arithmetische Mittelwert berechnet. Ausgewertet wurden die Ergebnisse der Messungen bei 20 ° Einfallswinkel, deren gemittelte Skalenteile angegeben werden.

Wachshaftungstest

Die Filme werden hergestellt, indem 80 g einer auf 14 % Feststoff verdünnten Dispersion über eine Gaze auf eine mit Rand versehene Metallplatte mit einer Oberfläche von 314 cm$^2$ ausgegossen werden. Auf diese Weise ergibt sich ein getrockneter Polymerfilm von 300 μm Schichtstärke. Aus diesem Film wird ein rundes Filmstück mit einem Durchmesser von 60 mm ausgeschnitten und über eine Zeitdauer von 48 h bei einer Temperatur von 23°C und bei 50 % rel. Luftfeuchte konditioniert. Mit dem erhaltenen Filmstück wird ein mit einem Metallflansch versehener Glaszylinder verschlossen, in den vorher 0,5 g Wasser eingewogen wurden. Danach wird die Filmoberseite mit komplett geschmolzenem gelbem Wachs (®Paradip Yellow B1 der Firma Paramelt B. V.) (80°C) 4 mm stark beschichtet. Nach einer Standzeit von 5 h bei 23°C und 50 % rel. Luftfeuchte wird der Verbund Polymerfilm/Wachs vom Glaszylinder abgenommen und durch Auseinanderziehen per Hand getrennt. Die Haftung wird je nach Trennwiderstand beurteilt:

(+) = Gute Adhäsion mit stärkerer Deformation des Polymerfilms beim Trennen.
(+/-) = Mittelgute Adhäsion mit mittelstarker Deformation des Polymerfilms beim Trennen.
(-) = Schlechtere Adhäsion mit nur gering auftretender Deformation des Polymerfilms beim Trennen.

Messung der Wasserdampftransmissionsrate

Zur Messung der Wasserdampftransmissionsrate werden zunächst analog der Vorgehensweise beim Wachshaftungstest Filmstücke hergestellt und klimatisch konditioniert.
Die zwei Filmstücke werden jeweils in ein Gefäß eingespannt, in dessen Glasschale zuvor exakt 10 g E-Wasser eingewogen wurden. Bei dem Gefäß handelt es sich um einen hohen Metallzylinder mit einer Wandstärke von 4 mm, einer Höhe von 20 mm und einem Innendurchmesser von 55 mm mit einer herausnehmbaren integrierten Glasschale. Auf diese Glasschale wird zwischen zwei Gummidichtungen das runde Filmstück mit einem Durchmesser von etwa 60 mm gelegt. Um zu verhindern, daß während des Versuches Wasserdampf zwischen den beiden Dichtungsringen entweicht, wird zusätzlich ein Metallring mit sechs Schrauben oben auf den Metallzylinder geschraubt. Es verbleibt eine Filmfläche von 23 cm$^2$, durch die Wasser verdunsten kann. Nach dem sorgfältigen Verschrauben wird das Gefäß mit dem Film auf der Analysenwaage gewogen. Die Gewichtsbestimmung wird nach 7 Tagen wiederholt. Während dieser Zeit werden die Proben bei 23 °C und 50 % rel. Luftfeuchtigkeit gelagert.
Die Bestimmung der Wasserdampftransmissionsrate geschieht wie folgt:
Berechnung: Wasserverlust = 1. Wägung - Rückwägung (Angabe aller Werte in g)

$$\text{Berechnung der Diffusion:} \quad \frac{\text{Wasserverlust}}{\text{Fläche x Anzahl Tage}} \quad = \quad \frac{\text{Wasserverlust x } 10^4}{23 \times 7} \quad \left[ \frac{g}{m^2 * d} \right]$$

Die so ermittelten Werte beziehen sich auf die verwendete Filmstärke von 300 μm.
Die Zusammenfassung der durchgeführten Versuche und die Ergebnisse der anwendungstechnischen Prüfungen sind in Tabelle 1 zusammengefaßt.

Tabelle 1

| Beispiel | 1 | 2 | 3 | 4 | 5 | 6 | Vergleichsbeispiel V1 |
|---|---|---|---|---|---|---|---|
| Vinylacetat % | 55 | 60 | 58 | 55 | 45 | 50 | |
| Dibutylmaleinat % | 40,75 | 35,75 | 35,75 | 40,75 | 50,75 | 45,75 | |
| Mono-2-ethylhexylmaleinat % | 4,25 | 4,25 | 6,25 | 4,25 | 4,25 | 4,25 | |
| PVOH 56-88 % | 2 | 2 | 2 | 2 | 1,5 | 1,5 | |
| Genapol O-120 % | - | - | - | - | 2 | 2 | |
| Genapol O-200 % | 2 | 2 | 4 | 4 | - | - | |
| pH-wert | 4,7 | 4,7 | 4,6 | 4,6 | 4,6 | 4,6 | 4,5 |
| Feststoffgehalt % | 51,9 | 51,9 | 51,3 | 51,6 | 51,6 | 51,8 | 45 |
| Rest-vinylacetat % | 0,29 | 0,31 | 0,4 | 0,41 | 0,45 | 0,33 | - |
| Visk. Brookfield RVT Spindel 6/20 23 °C mPa*s | 8200 | 10900 | 6400 | 7200 | 7200 | 6100 | 15000 |
| Wasserdampf-transmission n. 7d 9/(m$^2$*d) | 69,9 | 70,7 | 72,1 | 73,1 | 63 | 54,4 | 175 |
| Filmglanz Skt. 20 ° Winkel | 136 | 131 | 130 | 134 | 135 | 118 | 95 |
| Glastemperatur °C | 16,7 | 17,4 | 16,5 | 13,8 | 10,9 | 14,9 | 18 |
| Wachshaftung | + | + | + | + | +/- | + | + |

Diese Ergebnisse verdeutlichen, dass im Vergleich zu einer herkömmlichen, handelsüblichen Dispersion zur Beschichtung von Lebensmitteln, insbesondere Hartkäse, dass durch die erfindungsgemäße Stoffauswahl eine deutlich reduzierte Wasserdampftransmissionsrate eingestellt werden kann, ohne dass die für dieses Einsatzgebiet wichtigen Größen wie Filmglanz und Wachshaftung negativ beeinflusst werden. Hier wird im Gegenteil sogar noch ein vergleichbares bzw. besseres Eigenschaftsbild erreicht. Die erfindungsgemäßen Beispiele besitzen darüber hinaus eine günstige Applikationsviskosität und erfüllen damit die Teilforderung nach einer Eignung als Käsebeschichtungsmasse.

Die Erfindung wird weiterhin durch das nachfolgende Beispiel anhand der Beschichtung von handelsüblichen Salatgurken beschrieben. Die erhaltenen Ergebnisse hinsichtlich des Gewichtsverlustes über einen gewissen Zeitraum treten im gleichen Umfang bzw. in gleicher Qualität auch bei Beschichtungen von Fleischund Wurstwaren, für Gemüse, für Früchte, vorzugsweise Hartschalenfrüchte, insbesondere Citrusfrüchte und für Saatgut etc. mit den erfindungsgemäßen wässrigen copolymeren Polyvinylester-Dispersionen auf. Die Erfindung ist daher nicht auf dieses konkrete Beispiel beschränkt.

Beschichtungszusammensetzung

Die Dispersionen der erfindungsgemäßen Beispiele 1 und 2 sowie das Vergleichsbeispiel V2 (Mowilith® LDM 1481, copolymere Vinylacetat/Ethylen-Dispersion, Handelsware der Celanese Emulsions GmbH, D-65926 Frankfurt/Main) wurden mit Wasser jeweils auf einen Feststoff von 50 Gew.-% eingestellt. Man erhielt Viskositäten von 0,4 - 5 Pa*s (20 ºC, Brookfield RVT, Sp. 1 bzw. Sp. 3). Die Beschichtungszusammensetzungen enthielten keine weiteren Konservierungsmittel.

Beschichtung von Salatgurken

Frische, handelsübliche und durch kurzes Spülen mit Wasser an der Oberfläche gereinigte Salatgurken (Länge ca. 25 cm, Durchmesser ca. 5 cm) wurden für 5 sec vollständig in die jeweilige Beschichtungszusammensetzung getaucht und für 30 Minuten an der Luft unter jeweils identischen Bedingungen getrocknet. Die so beschichteten Salatgurken und eine als Referenz dienende, nicht beschichtete Salatgurke wurden anschließend für 21 Tage bei 23 ºC und 50 % rel. Luftfeuchte gelagert. Der Gewichtsverlust wurde während der Lagerung in bestimmten Abständen ermittelt. Die in den Tabellen aufgeführten Ergebnisse sind Prozentangaben und stellen den Mittelwert von zwei Einzelbestimmungen dar.

Tabelle 2:

| Gewichtsverluste bei beschichteten Salatgurken in Prozent | | | | | |
|---|---|---|---|---|---|
| | 0 Tage | 2 Tage | 7 Tage | 14 Tage | 21 Tage |
| Referenz | 0 | 7 | 17 | 27 | 35 |
| Beispiel 1 | 0 | 0 | 5 | 17 | 25 |
| Beispiel 2 | 0 | 0 | 4 | 10 | 16 |
| Vergleichsbeispiel V2 | 0 | 2 | 6 | 13 | 22 |

Tabelle 3:

| Zustand der beschichteten Salatgurken nach 21 Tagen | | | | |
|---|---|---|---|---|
| | Zustand | pH Wert[1] | Aussehen der Oberfläche | Abziehverhalten der Beschichtung |
| Referenz | Am oberen Ende stark eingetrocknet, unappetitliches Aussehen | 4,1 | --- | --- |
| Beispiel 1 | Über gesamte Länge leicht eingetrocknet, fast frisches Aussehen | 6,2 | Flexibel, transparent, glänzend | Löst sich über gesamte Länge in einem Stück |
| Beispiel 2 | Über gesamte Länge leicht eingetrocknet, fast frisches Aussehen | 6,3 | Flexibel, transparant, glänzend | Löst sich über gesamte Länge in einem Stück |
| Vergleichsbeispiel V2 | Über gesamte Länge eingetrocknet, noch akzeptables Aussehen | 6,3 | Flexibel, transparant, glänzend | Löst sich über gesamte Länge mit Fetzenbildung |

1) pH-Wert wurde durch Aufschneiden der Salatgurken in der Mitte mittels einer Standard-Glaselektrode bestimmt.

Diese Versuchsserie zeigt, dass die erfindungsgemäßen wässrigen copolymeren Polyvinylester-Dispersionen den Gewichtsverlust gegenüber einem nicht oberflächenbehandelten Lebensmittel deutlich um 28 bzw. um 54 % senken und damit als Beschichtungs- und Verpackungsmaterial geeignet sind. Gegenüber einer bekannten Dispersion aus dem Stand der Technik wie LDM 1481, die sich prinzipiell zur Beschichtung von Lebensmitteln eignet, erreicht man ebenfalls vergleichbare oder deutlich niedrigere Gewichtsverluste, einen verbesserten optischen Frischeeindruck der beschichteten Substrate und eine gleichzeitig verbesserte Ablösbarkeit.

**Patentansprüche**

1.   Wässrige copolymere Polyvinylester-Dispersion, enthaltend

A) 100 Gewichtsteile eines Copolymerisats abgeleitet von

A1 ) 34,9 bis 95 Gew.-% Vinylestern von aliphatischen, gesättigten Carbonsäuren,
A2) 4,9 bis 65 Gew.-% Maleinsäureestern und/oder Fumarsäureestern von einwertigen aliphatischen Alkoholen mit einer Kettenlänge von $C_1$-$C_{18}$ und/oder alpha-Olefinen mit 2 bis 8 C-Atomen,
A3) 0,1 bis 10 % mindestens einem Comonomeren mit mindestens einer stabilisierenden nichtionischen oder ionischen Gruppe, sowie
A4) gegebenenfalls weiteren Comonomeren,

wobei die Summe der Komponenten A1, A2 und A3 und gegebenenfalls A4 100 Gew.-% ergeben,
B) 0,1 bis 4,5 Gewichtsteile, bezogen auf die Gesamtmenge der eingesetzten Monomeren, vorzugsweise 0,5 bis 3,5 Gewichtsteile mindestens eines Schutzkolloids, vorzugsweise Polyvinylalkohol,
C) 0,1 bis 10 Gewichtsteile, bezogen auf die Gesamtmenge der eingesetzten Monomeren, vorzugsweise 0,5 bis 5,0 Gewichtsteile eines nichtionischen Emulgators, und
D) gegebenenfalls weitere für die Beschichtung von Lebensmitteln geeignete Zusätze.

2. Wässrige copolymere Polyvinylester-Dispersion nach Anspruch 1, **dadurch gekennzeichnet, dass** Komponente A1 ) ausgewählt wird aus Vinylestern einer Fettsäure mit einer Kettenlänge von $C_1$-$C_{18}$, insbesondere aus Vinylacetat, oder einem Gemisch dieser Vinylester.

3. Wässrige copolymere Polyvinylester-Dispersion nach Anspruch 1, **dadurch gekennzeichnet, dass** Komponente A2) ausgewählt wird aus Dialkylmaleinat und/oder -Fumarat oder Ethylen, insbesondere unter Dibutylmaleinat und/oder -fumarat.

4. Wässrige copolymere Polyvinylester-Dispersion nach Anspruch 1, **dadurch gekennzeichnet, dass** Komponente A3) ausgewählt wird aus Estern von ethylenisch ungesättigten aliphatischen Mono- oder Dicarbonsäuren mit Polyalkylenglykolen, Estern von ethylenisch ungesättigten Carbonsäuren mit Aminoalkoholen, (Meth)acrylsäureestern mit zweiwertigen aliphatischen Alkoholen der Kettenlänge $C_2$-$C_{18}$, bei denen nur eine Alkoholgruppe verestert ist, Amiden von ethylenisch ungesättigten Carbonsäuren, (Meth)acrylsäureestern von Sulfoalkanolen, N-Vinylamiden einschließlich der N-Vinyllactame, ethylenisch ungesättigten Carbonsäuren oder Sulfonsäuren, die ein- oder zwei Carboxylgruppen oder eine Sulfonsäuregruppe aufweisen oder deren Salze und Gemischen von zwei oder mehreren dieser Monomere.

5. Wässrige copolymere Polyvinylester-Dispersion nach Anspruch 4, **dadurch gekennzeichnet, dass** Komponente A3) ausgewählt wird aus Halbestern der Malein- und/oder Fumarsäure und/oder Itaconsäure mit einwertigen aliphatischen gesättigten Alkoholen der Kettenlänge $C_1$-$C_{18}$ sowie deren Alkaliund Ammoniumsalzen.

6. Wässrige copolymere Polyvinylester-Dispersion nach Anspruch 1, **dadurch gekennzeichnet, dass** Copolymer A) nur von den Monomergruppen A1 bis A3 abgeleitete wiederkehrende Struktureinheiten aufweist.

7. Wässrige copolymere Polyvinylester-Dispersion nach Anspruch 1, **dadurch gekennzeichnet, dass** als Schutzkolloid B) Polyvinylalkohol eingesetzt wird.

8. Wässrige copolymere Polyvinylester-Dispersion nach Anspruch 7, **dadurch gekennzeichnet, dass** der Polyvinylalkohol mindestens einen höhermolekularen Polyvinylalkohol vom Hydrolysegrad von 85 - 92 mol-% mit einer Viskosität der 4 %igen wässrigen Lösungen bei 20 °C von 30 bis 70 mPa*s enthält.

9. Wässrige copolymere Polyvinylester-Dispersion nach Anspruch 8, **dadurch gekennzeichnet, dass** der höhermolekulare Polyvinylalkohol zu 75 bis 100 Gew.%, bezogen auf die Gesamtmenge an eingesetztem Schutzkolloid, im Schutzkolloid vorliegt.

10. Wässrige copolymere Polyvinylester-Dispersion nach Anspruch 1, **dadurch gekennzeichnet, dass** als nichtionische Emulgatoren C) Acyl-, Alkyl-, Oleylund/oder Alkylaryloxethylate eingesetzt werden.

11. Wässrige copolymere Polyvinylester-Dispersion nach Anspruch 1, **dadurch gekennzeichnet, dass** der Gehalt an gegebenenfalls anwesenden ionischen Emulgatoren, bezogen auf die Gesamtmenge der eingesetzten ionischen und nichtionischen Emulgatoren, weniger als 10 Gew.%, bezogen auf die Gesamtmenge an eingesetztem Schutzkolloid, beträgt.

12. Wässrige copolymere Polyvinylester-Dispersion nach Anspruch 11, **dadurch gekennzeichnet, dass** neben nichtionischen Emulgatoren keine weiteren ionischen Emulgatoren eingesetzt werden.

13. Wässrige copolymere Polyvinylester-Dispersion nach Anspruch 1, **dadurch gekennzeichnet, dass** deren Viskosität mindestens 1,5 Pa*s (gemessen bei 20°C mit einem RTV Brookfield Viskosimeter), vorzugsweise von mindestens 2 Pa*s, und ganz besonders bevorzugt von 3 bis 20 Pa*s beträgt.

14. Wässrige copolymere Polyvinylester-Dispersion nach Anspruch 1, **dadurch gekennzeichnet, dass** deren Verfilmungen eine Wasserdampftransmissionsrate von weniger als 150 g/(m$^2$ · d), vorzugsweise von weniger als 120 g/(m$^2$ · d) und insbesondere von weniger als 100 g/(m$^2$ · d) aufweisen.

15. Wässrige copolymere Polyvinylester-Dispersion nach Anspruch 1, **dadurch gekennzeichnet, dass** diese mindestens ein Biozid enthalten.

16. Verfahren zur Herstellung von wässrigen copolymeren Polyvinylester-Dispersionen nach Anspruch 1 umfassend die radikalische Emulsionspolymerisation von

    i) 34,9 bis 95 Gew.-% Vinylestern von aliphatischen, gesättigten Carbonsäuren (A1),
    ii) 4,9 bis 65 Gew.-% Maleinsäureestern und/oder Fumarsäureestern von einwertigen aliphatischen Alkoholen mit einer Kettenlänge von C$_1$-C$_{18}$ und/oder alpha-Olefinen mit 2 bis 8 C-Atomen (A2),
    iii) 0,1 bis 10 % mindestens eines Comonomeren mit mindestens einer stabilisierenden nichtionischen oder ionischen Gruppe (A3), sowie
    iv) gegebenenfalls weiteren Comonomeren (A4),
    wobei die Summe der Komponenten A1, A2 und A3 und gegebenenfalls A4 100 Gew.-% ergeben, in Gegenwart von
    v) 0,1 bis 4,5 Gewichtsteilen, bezogen auf die Gesamtmenge der eingesetzten Monomeren, mindestens eines Schutzkolloids, und
    vi) 0,1 bis 10 Gewichtsteilen, bezogen auf die Gesamtmenge der eingesetzten Monomeren, nichtionischen Emulgators.

17. Verfahren zur Herstellung von wässrigen copolymeren Polyvinylester-Dispersionen nach Anspruch 16, **dadurch gekennzeichnet, dass** die Polymerisation im kombinierten Batch/Zulauf-Verfahren oder besonders bevorzugt im Zulaufverfahren erfolgt, wobei 1 bis 15 Gew. % der Monomeren zum Starten der Polymerisation vorgelegt werden.

18. Verfahren zur Herstellung von wässrigen copolymeren Polyvinylester-Dispersionen nach Anspruch 16, **dadurch gekennzeichnet, dass** als Starter der radikalischen Emulsionspolymerisation wasserlösliche Persulfate, insbesondere Ammoniumpersulfat oder Natriumpersulfat verwendet werden.

19. Verfahren zur Herstellung von wässrigen copolymeren Polyvinylester-Dispersionen nach Anspruch 16, **dadurch gekennzeichnet, dass** nach Abschluss der Polymerisation zur Entmonomerisierung eine Nachbehandlung angeschlossen wird, vorzugsweise eine Kombination aus physikalischen und chemischen Methoden.

20. Verwendung der wässrigen copolymeren Polyvinylester-Dispersionen nach Anspruch 1 als Beschichtungsmittel und/oder als Verpackungsmaterial für Lebensmittel.

21. Verwendung nach Anspruch 20, **dadurch gekennzeichnet, dass** es sich bei den Lebensmitteln um Fleisch- und Wurstwaren, Gemüse, insbesondere Stangengemüse, Früchte, vorzugsweise Hartschalenfrüchte, insbesondere Citrusfrüchte, um Saatgut und um Käse handelt.

22. Verwendung der wässrigen copolymeren Polyvinylester-Dispersionen nach Anspruch 1 zur Herstellung von Beschichtungen als Hilfsmittel bei der Herstellung von Lebensmitteln, insbesondere von Käse.

23. Verfilmungen mit einer Wasserdampftransmissionsrate von weniger als 150 g/(m$^2$ · d) abgeleitet von einer wässrigen copolymeren Polyvinylester-Dispersion nach Anspruch 1.

**Europäisches**
**Patentamt**

## EUROPÄISCHER RECHERCHENBERICHT

Nummer der Anmeldung

EP 04 02 6366

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | WO 02/074856 A (CLARIANT GMBH; HELDMANN, CARSTEN; PETRI, HARALD; WIRTH, THOMAS) 26. September 2002 (2002-09-26) * Seite 20, Zeile 1 - Zeile 14 * * Seite 26, Zeile 24 - Zeile 29; Ansprüche; Beispiele A1,B1 * ----- | 1-11, 13-23 | C08F222/12 C08F218/08 C08F2/30 C09D135/02 C09D131/04 A23L1/00 A23C19/16 |
| X | EP 1 153 979 A (WACKER POLYMER SYSTEMS GMBH & CO. KG) 14. November 2001 (2001-11-14) * Ansprüche; Beispiele * ----- | 1-4, 7-11, 16-19 | |
| D,A | WO 03/054041 A (CLARIANT GMBH; JAKOB, MARTIN; HARRER, HEINRICH) 3. Juli 2003 (2003-07-03) * Seite 8, Zeile 6 - Zeile 26; Ansprüche; Beispiele * ----- | 1-23 | |

RECHERCHIERTE SACHGEBIETE (Int.Cl.7)

C08F
A23C
A23L
C09D

Der vorliegende Recherchenbericht wurde für alle Patentansprüche erstellt

| Recherchenort | Abschlußdatum der Recherche | Prüfer |
|---|---|---|
| Den Haag | 11. April 2005 | de Los Arcos, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 02 6366

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2005

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 02074856 | A | 26-09-2002 | DE | 10112431 | A1 | 02-10-2002 |
| | | | AT | 283902 | T | 15-12-2004 |
| | | | BR | 0208081 | A | 02-03-2004 |
| | | | CZ | 20032465 | A3 | 14-01-2004 |
| | | | DE | 50201678 | D1 | 05-01-2005 |
| | | | WO | 02074856 | A2 | 26-09-2002 |
| | | | EP | 1370621 | A2 | 17-12-2003 |
| | | | HU | 0303202 | A2 | 29-12-2003 |
| | | | NO | 20034024 | A | 11-09-2003 |
| | | | PL | 363429 | A1 | 15-11-2004 |
| | | | US | 2004077782 | A1 | 22-04-2004 |
| EP 1153979 | A | 14-11-2001 | DE | 10022992 | A1 | 06-12-2001 |
| | | | AT | 243726 | T | 15-07-2003 |
| | | | DE | 50100327 | D1 | 31-07-2003 |
| | | | EP | 1153979 | A2 | 14-11-2001 |
| | | | US | 2002007009 | A1 | 17-01-2002 |
| WO 03054041 | A | 03-07-2003 | DE | 10163586 | A1 | 03-07-2003 |
| | | | WO | 03054041 | A1 | 03-07-2003 |
| | | | EP | 1458774 | A1 | 22-09-2004 |

EPO FORM P0461

Für nähere Einzelheiten zu diesem Anhang : siehe Amtsblatt des Europäischen Patentamts, Nr.12/82